Europäisches Patentamt

European Patent Office    (11) Publication number:    **0 130 698**

Office européen des brevets    **B1**

---

(12)    **EUROPEAN PATENT SPECIFICATION**

(45) Date of publication of patent specification: **15.03.89**    (51) Int. Cl.⁴: **G 11 B 7/24, G 11 B 7/26**

(21) Application number: **84303683.1**

(22) Date of filing: **01.06.84**

(60) **Divisional application 87104171 filed on 20.03.87.**

(54) Cost-reduced optical memory disk.

(30) Priority: **01.06.83 US 499924**

(43) Date of publication of application:
**09.01.85 Bulletin 85/02**

(45) Publication of the grant of the patent:
**15.03.89 Bulletin 89/11**

(84) Designated Contracting States:
**BE DE FR GB IT NL SE**

(56) References cited:
**EP-A-0 046 104**
**EP-A-0 049 821**
**EP-A-0 067 095**
**EP-A-0 079 229**

**Patent Abstracts of Japan vol. 6, no. 233, 19 November 1982 & JP-A-57-133532**

(73) Proprietor: **UNISYS CORPORATION**
**1, Burroughs Place**
**Detroit Michigan 48232 (US)**

(72) Inventor: **Lee, Neville**
**3472 Avenue Ladera**
**Thousand Oaks California 91 362 (US)**

(74) Representative: **Webb, Frederick Ronald et al**
**G.F. Redfern & Co. Marlborough Lodge 14**
**Farncombe Road**
**Worthing West Sussex BN11 2BT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a novel high density information storage medium, and more particularly to such a medium adapted for recording with low-power laser means.

Introduction, Background

Workers in the art of recording, storing and detecting and retrieval of digital information are increasingly concerned with optical techniques; e.g., whereby a special 'optical digital data' (ODD) disk may be used for such. By analogy such data is conventionally stored today on magnetic disks for use with high speed digital computers.

This disclosure relates to novel optical recording media and associated apparatus adapted to record, and read-back, digital information using a beam of prescribed radiation energy; it especially relates to such which are cost-reduced and are suited for low power laser equipment.

Workers will agree that the success of an ODD system depends greatly on the storage medium. Workers in the art have, for some time now, pondered how to develop a satisfactory practical ODD disk medium, especially one that is cost-effective and adapted for the low power laser equipment presently available. This invention teaches a novel practical low-cost, mass producible ODD disk design adapted for such purposes.

I have discovered a new optical recording disk design which is surprisingly inexpensive to fabricate, especially as compared with media being characterized for the most part as "Winchester" (disk) media since they generally contemplated a rigid aluminum Winchester disk as the carrier and as the substrate for deposition of recording layers. Here, in contrast, I contemplate deposition on the "protective cap" or the like.

Such media will be seen as apt for "non-ablative" recording, i.e., wherein the optical properties of a recording layer are permanently altered by laser heating without need for massive translation or expulsion of material. This hole-formation mechanism is compatible with an in-contact overcoat, so that a continuous media structure can be employed without need for "air spaces". With this type of concept, an extremely flexible design can be achieved; e.g., in which substrate dimensions and R/W wavelength can easily be tailored for various applications. Furthermore, a very simple media structural concept is taught wherein there is no need to produce a disk surface exhibiting high optical flatness and regularity.

As a feature hereof, I contemplate the use of novel structure, materials, and fabrication methods for such records, especially those exhibiting extended archival life (i.e., which are highly resistant to oxidation or like environmental degradation, during the contemplated use). Thus, little or no "loss" of recorded information should occur over extended (storage) life—with reflectivity-shifts remaining large enough, and stable enough, to "read". And, novel simplified disk fabrication is taught whereby the disk cost may be significantly reduced and fabrication simplified—with mass-fabrication being feasible (as opposed to the present practice of "batch-fabrication").

The novel recording media taught herein will be generally assumed as meeting the foregoing criteria; and, where possible, as also meeting one or more of the "Target" performance criteria presented in Table I below. (See also "Optical Properties of Tellurium Films Used for Data Recording" by Ash and Allen, SPIE, Vol. 222, 1980).

TABLE I (Target media criteria)

1. "High" Sensitivity:
—allow recording with moderate-power laser means. "Sensitivity" will be understood as minimum laser power needed for bit formation (change in spot reflectivity, akin to that resulting from formation of a hole, or other void or like change in medium, giving adequate read-out at contemplated recording rate). With the disk according to the invention, one may typically "write" with a pulse of moderate laser power for a reasonable pulse period—and not be degraded by read-out (e.g., on repeated playback).

1—A. High S/N: (Adequate read-out):
Signal to noise ratio (for adequate read-out); on the order of about 10—40 dB or more.

2. "Archival Stability":
Able to be used or stored for several years in "normal computer environment" and maintain minimum read-out quality.

3. "Computer Records":
Assume capability to operate with present day high speed digital computers—e.g., with comparable capabilities to today's magnetic disk storage equipment (cf. high bit density, etc.).

4. "Deposit-able"—associated film structure can be deposited on a "commercial scale" to give repeatable, controlled characteristics.

5. Overcoat-protected: Absorber film will be covered (e.g., up to a few mils) to mechanically protect it and defocus "surface dirt" without sacrificing above features, e.g. still give adequate read-out (preferably overcoat can also impede heat and contaminant-gases, etc., from reaching absorber film).

6. Minimum Cost:
Significantly less than 100 US dollars.

Thus, it is an object hereof to provide the foregoing, and other related, features and advantages. A more particular object is to do so teaching low-cost ODD media. Another object is to teach such media which is readily mass-produced and which exhibits good sensitivity, even with low-power lasers, as well as giving extended archival life. A further object is to teach fabrication of such media as disks from continuous web substrates. Another related object is to do so while stamping-out one or several ODD disks at a time from a common web structure.

European Patent Application 0 049 821 discloses a double-sided optical disk wherein a pair of memory units are spaced apart either by an air gap or by a rigid supportive member such as an aluminium disk or spider. The memory units have a transparent substrate whereon an optically recordable layer is deposited. The spaced memory units have their transparent substrates outermost with the optically sensitive layers innermost and protected by the substrates. The present invention, according to one aspect, seeks to provide improvement thereover by eliminating the need for the air gap or supportive member. According to another aspect the present invention seeks to provide improvement by providing a disk which is fabricated in a single series of coating processes.

European Patent Application 0 079 229 (by the same applicants) shows an optical disk having a tri-layer deposited reflective-layer-downmost with an overlying protective overcoat onto a supportive opaque substrate. The present invention seeks to provide improvement thereover by eliminating the opaque substrate and by providing a method of disk fabrication consisting in just one series of coating processes to form a double-sided disk.

European Patent Application 0 067 095 shows a method of optical-disk fabrication wherein an optically sensitive layer is coated onto a flexible elastic web. The web is then radially stretched before being laminated to a disk-shaped substrate by a glue layer. The present invention seeks to provide improvement over such a disk by providing a double-sided disk which eliminates the need for a supportive substrate and by providing a method of double-sided disk fabrication requiring only a single series of layer deposition steps.

European Patent Application 0 046 104 discloses an optical disk comprising a transparent substrate having an optical tri-layer structure on a face thereof with the reflective layer furthest from the transparent substrate. The present invention seeks to provide improvement by providing a fabrication method where such a disk may be made in double sided form in a single series of coating steps and by providing a simplified double-sided structure.

The present invention consists in a method of fabricating a double-sided optical recording disk responsive on each side to a write-radiation beam of prescribed energy and wavelength, the method being characterised by comprising the steps of: selecting a clear polymer substrate transparent to said radiation beam, having a defocusing thickness, and having a surface adapted to enhance island deposition; depositing a first non-ablative island absorber film onto said surface of said substrate; depositing a first polymeric spacer layer onto said first island film; depositing a reflective film, reflective on both sides, onto said first polymeric spacer layer; depositing a second polymeric spacer layer onto said reflective layer; depositing a second non-ablative island absorber film onto said second polymeric spacer layer; and depositing a clear polymer overcoat layer, transparent to said radiation beam and having a defocusing thickness, onto said second island film; both said first and second spacer layers having anti-reflective properties in combination with the reflector film.

Reference is made to European Patent Application No. 87104171.1 (EP—A—0239893) being a divisional application from the present application.

Brief description of the drawings

These and other features and advantages of the present invention will be appreciated by workers as they become better understood by reference to the following detailed description of the present preferred embodiments, these being considered in conjunction with the accompanying drawings, wherein like reference symbols denote like elements:

Figures 1 and 2 provide a cross-sectional, enlarged view of an idealised portion of a prior ODD recording disk;

Figures 4 and 5 are like views of a related kind of disk modified so that an inverted tri-layer is deposited upon a transparent substrate.

Figures 6A, 6B and 7 are schematic representations of associated fabrication modes.

Figure 8 is a like representation of an embodiment of the invention.

Figure 9 is a schematic illustration of how record disks according to such embodiments can be stamped-out—a pair of such disks being indicated in Figure 10, while Figures 3 and 11 indicate alternative fabrication.

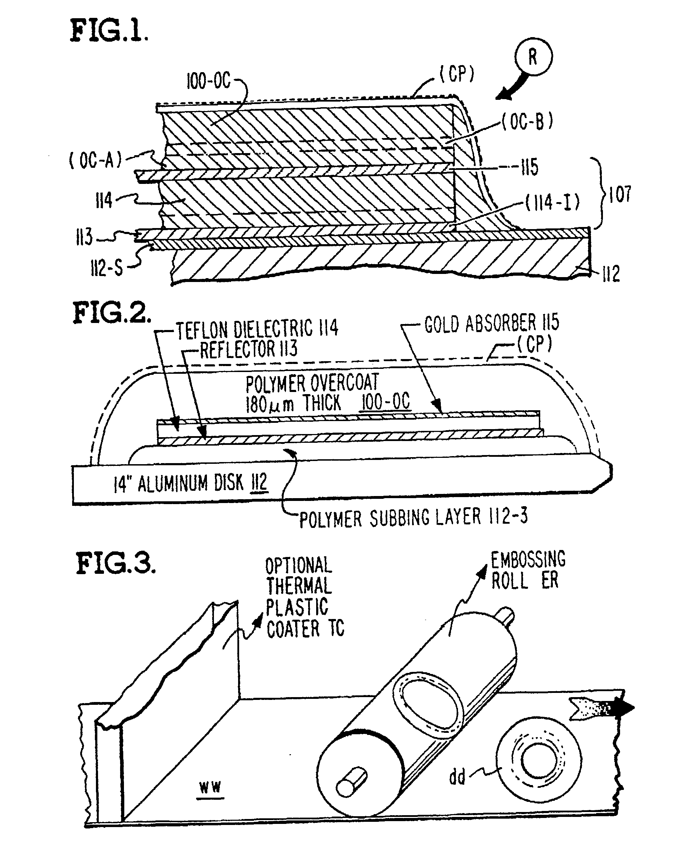

—Example A: prior ODD disk; Figures 1, 2

Figure 1 depicts, in fragmentary idealized section, an improved ODD disk record R, apt for use in "low power" R/W laser systems (see schematic side view of full disk in Figure 2). Record R comprises a substrate disk 112 on which is disposed a "tri-layer" 107 including a "gold island" absorber film 115 atop an anti-reflective optical substrate comprising a dielectric spacer layer 114 on a reflector layer 113. Record R is capped with (encapsulated in) an overcoat 100-oc upon absorber 115. Further details are as follows.

Substrate disk 112 is preferably a well-known bulky, rigid, relatively costly metal Winchester disk of the type presently used for magnetic recording in computer systems (aluminum alloy, 14″ diameter, highly polished carrier surface). A "standard" 14″ disk 112 was prescribed to better accommodate several gigabytes storage per recording surface. Salient characteristics of the aluminum substrate are its availability, its flatness and its ability to withstand environmental requirements and to accommodate rotation at speeds above 2000 rpm.

While such an aluminum substrate meets most of the gross mechanical requirements, its surface smoothness is not sufficient ("optical flatness" needed), even when it is diamond turned. Thus, at least one subbing layer (112-S), is usually added. This preferably comprises at least one relatively thin polymer subbing coat 112-S, spin-coated onto the surface of disk 112 and then cured (e.g., with UV radiation). This polymer subbing layer can provide the required "optically-flat" surface (low roughness). The subbing will be selected on the basis of achievable performance, good environmental characteristics and the ease of application and cure. This "subbing layer" is adpated, as known in the art, to provide a smooth surface for deposition of reflector layer 113.

—Tri-layer: Au isles—on Teflon—on reflector

This tri-layer optical structure in a tuned optical network consisting of three primary layers. As mentioned, reflector 113 and spacer 114 serve to provide an anti-reflective base on which absorber film 115 is applied, to complete the known "tri-layer". Here, spacer 114 preferably comprised a transparent "modified fluoropolymer", or a like organic, of "tri-layer thickness".

The first layer deposited is a reflector layer 113 adapted to be highly reflective at the subject wavelengths, (e.g., aluminum is known for this) laid atop subbing 112-S. On reflecting layer 113, is laid a "quarterwave thickness" of spacer 114 (e.g., "modified Teflon") which, as workers know, has a thickness adapted to tune the structure to achieve a minimum reflectance with the absorber layer 115 (which is deposited atop spacer 114). Such an organic spacer can also serve as a "thermal barrier", to help prevent reflector 113 from draining any appreciable energy from absorber 115 (stable under such heating).

Absorber layer 115 preferably comprises an absorber metal (e.g., pure gold preferred, or like absorber compatible with in-contact overcoat), vapor-deposited in island form (to yield "first minimum reflectance depth", etc.). The combination of the absorber, dielectric spacer and reflector provide an optically tuned network which has a prescribed minimal reflectance at the desired wavelength. This particular design may be understood as optimized for a R/W beam from a 633 nanometer Helium-Neon laser, and also to optimize archival qualities.

4

Using a "modified Teflon" or a like stable, "less rigid" elastomer as the dielectric material 114 can further enhance archival performance and give superior high temperature stability, as well as minimizing moisture absorption. The spacer material will be compatible with the absorber, draw a minimum of heat from it and facilitate good sensitivity, while bonding well with the subjacent reflector 113. This structure, and associated material selection provides a highly sensitive structure tuned to a minimum reflectance (for maximum absorption) at the laser writing wavelength, while also providing good protection from moisture and other contamination, as is needed for an OD disk of archival quality.

—Polymer overcoat

After vacuum deposition of the three optical layers, a relatively thick polymer overcoat 100-oc is next applied on absorber 115, to "encapsulate" tri-layer 107 and seal with subbing 112-S. Overcoat 100-oc is intended to function, as known in the art, as a scratch-resistant, seal and barrier to intrusion of contaminants (e.g., water, oxygen vapors) as well as to "defocus" dirt and grime thereon and to accommodate "agglomeration" of the absorber.

That is, one may optically-eliminate (or at least reduce) the effects of surface dust, etc. (on 100-oc) by simply making it thick enough (and transparent to λo) to throw it out of focus when absorber 115 is illuminated. Thus, any dust particles settling on the overcoat surface will be displaced far enough from the focal plane of the optical system as to have no appreciable effect on read/write operations.

Overcoat 100-oc preferably comprises about 180 microns of a suitably-transparent polymer able to maintain good "thickness-control" (e.g., to within about 10—15 microns), being thick enough to accommodate relatively large dust particles. The 180 micron thick overcoat 100-oc will also preferably be covered with a surface wear-cap layer cp adapted for resisting scratches and wear, while inhibiting large dust particles from settling on the outer surface of the overcoat.

Now, workers will recognize that one will use such a record by rotating it (e.g., 1800 rpm contemplated) while using a laser Write Beam to write on a number of information tracks, each track comprising a succession of spaced "bit-sites" ("Transitions" written, there, as reflectivity changes), separated by unwritten areas in which the reflectivity of the absorptive layer 115 is undisturbed.

For read-out, a laser beam of relatively constant (reduced) intensity and prescribed wavelength is likewise focused on the information track comprising these bits at the absorber layer as the disk is rotated. Thus a bit can represent a "one" where the write-beam has switched reflectivity along this track; otherwise a "zero" may be understood. The read laser will apply energy insufficient to so change spot reflectivity, and at a frequency at which the undisturbed regions of the track exhibit an "anti-reflective" condition. A photo detector is positioned to receive light reflected from the passing "bit sites" being used, as known to develop an output signal representing the so-recorded "bits". The reflectance changes need only be sufficient to give the needed minimal read-out contrast (e.g., S/N ratio that can be tolerated in the contemplated playback mode).

Other prior art includes: R. A. Bartolini, et al, "Optical Disk Systems Emerge", IEE Spectrum, Aug. 1978, pp. 20—28. G. C. Kenney, et al., "An Optical Disk Replaces 25 Mag Tapes", IEEE Spectrum, February 1979, pp. 33—38. K. Bulthuis, et al., "Ten Billion Bits on a Disk", IEEE Spectrum, August 1979, pp. 26—33. A. E. Bell, et al., "Antireflection Structures for Optical Recording", IEEE Journal of Quantum Electronics, Vol. QE-14, No. 7, July 1978, pp. 487—495.

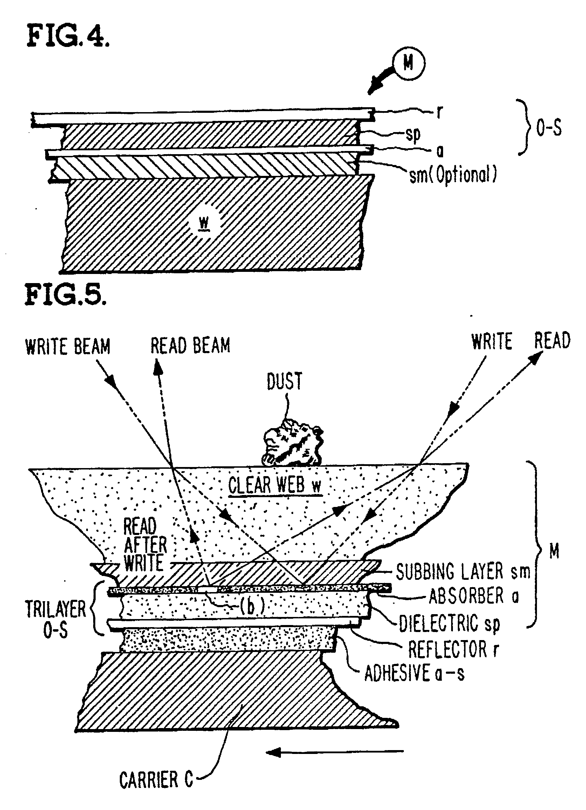

Figures 4, 5, 6B: show an example of an inverted tri-layer memory structure.

One feature is that the optical recording structure O-S is deposited on a transparent sheet w to form a memory structure M. That is, structure O-S (Figure 4), comprising absorber layer a, covered by dielectric spacer layer sp, on which reflector layer r is laid (—compare layers 115, 114, 113, respectively, of Figure 1, for example) is deposited on a sheet w, which preferably comprises a web of clear organic material continuously drawn through deposition stations as indicated below. A "smoothing/bonding" film sm (optional) may be applied on web w as required for adequate smoothness and/or bonding to absorber film "a". Layer sm can also be used to enhance island-deposition and improve sensitivity and S/N (according to material selected—details below). Spacer layer sp is then laid atop absorber a, followed by reflector r, atop sp.

The foregoing is in contradistinction to the prior art of Figures 1, 2, where the optical recording structure was deposited on a polished, smoothed aluminum disk surface (e.g., in Figure 1, reflector 113 deposited on smoothing layer 112-S of aluminum disk 112; then spacer 114 on 113, then absorber 115 on spacer 114, then overcoat 100-oc atop absorber 115).

Thus, in contrast with such "on-disk" deposition, the subject embodiment (Figure 4) may be characterized as an "inverted tri-layer", the order of deposition being reversed.

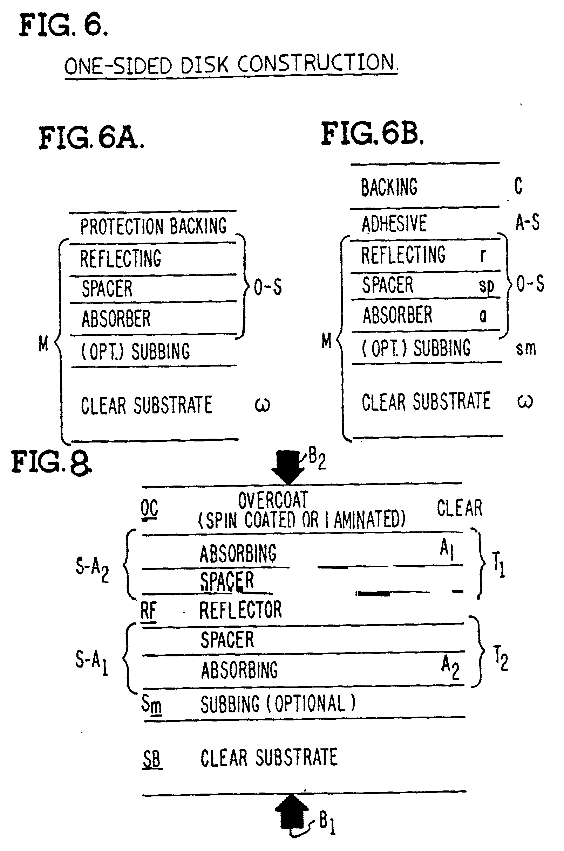

Here the substrate web w is also serving as a protective overcoat (or "cap") for the conventional tri-layer. Therefore, the selection of substrate material is extremely important; it can influence the entire coating process downstream. The substrate w should be clear, with low transmission loss at read/write laser wavelengths. It should be free of any form of aberration, defect or birefringences. The surface of the substrate should be very flat, smooth, and free of scratches, digs, or contaminations. The substrate should have very tight thickness control (high uniformity). The thickness (e.g., for defocusing surface dust) will depend on the specific optical system employed as workers know. It is important that the material is chemically and mechanically stable. The substrate should be strong, resistant-to-scratch and should not attract dust particles (e.g., see Figure 5).

Thus, once the optical R/W structure O-S has been so formed upon a clear substrate-cover w (e.g., as in Figure 4), the resulting memory structure M may now be attached to a "backing" or carrier means (e.g., a metal disk) as suggested by the Figure 6B diagram.

### Continuous web substrate

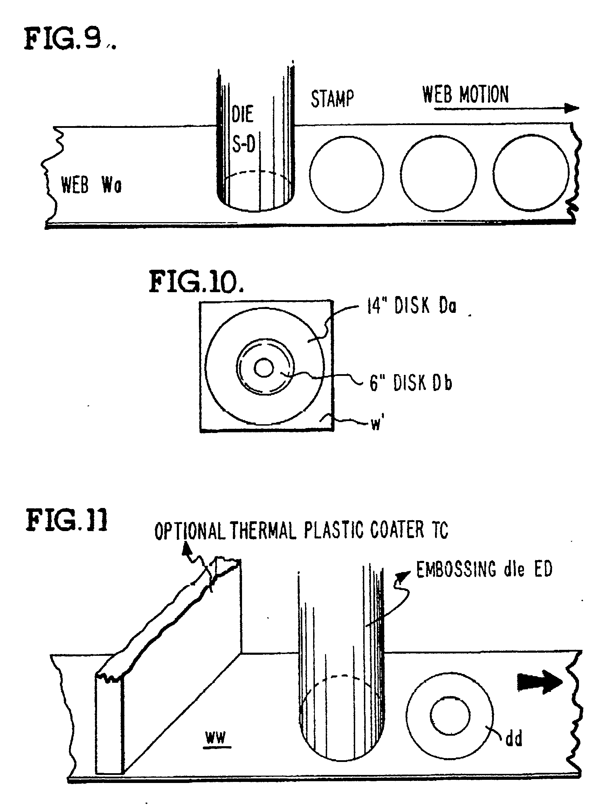

Although not necessary, it is here preferred to employ a "continuous" fabricating process, using flexible polymer web w as "substrate-cap" (like results can also be obtained by a similar process described for an "injection-molded" substrate; the difference is that one coats on a continuous web instead of an individual sheet). After the complete structure has been made, a disk with any desirable dimension can be stamped-out as noted elsewhere. It is interesting to note it is possible to simultaneously stamp out, for example, a six-inch disk within a 14" area without additional cost. This is illustrated in Figures 9 and 10.

Though quality control may be better using injection molding, it is possible to emboss servotrack format information on the web. This is illustrated in Figures 3 and 11, where an (optional) layer of a thermoplastic is coated on the web before the embossing process.

### Subbing layer considerations

While subbing thickness sm is not always required, it can serve three or more functions; it can improve the surface quality of the substrate; it can carry servotrack replication information as discussed above; and it can provide material more compatible with the hole formation mechanism in the absorbing layer so that the sensitivity and signal-to-noise can be optimized. Also, it can carry a nucleating surface-film adpated to enhance island-deposition.

Because of these various considerations, smoothing thickness sm may turn out to be a multiple layer deposited by mechanical and/or vacuum deposition. For example, to improve the surface quality, one can use UV curable polymer applied with mechanical means. For servotrack replication or embossing purposes, thermo-plastic may be preferred. To optimize sensitivity and signal-to-noise, a second "agglomeration-tolerant" overcoat material may be overlaid, to face the absorber film. The desired properties of this material are that it be soft or deformable (e.g., heat shrinkable or otherwise softened or made to accommodate agglomeration under the influence of heat). To control the hole forming process so that signal-to-noise is optimized, a "nucleating layer", like $SiO_2$, may be desirable next to the absorber.

Optical recording structure O-S may comprise the elements of the tri-layer described for Figures 1, 2 above.

Another feature of this memory structure is that a single memory structure M may be used to form a great many ODD disks (as noted below); disks may be mass-fabricated and formed in a continuous process (also noted below, e.g., see Figures 9, 10). Also, memory structure M is, unlike comparable known structures, apt for fabrication apart from, and independently of, associated carrier means, such as a carrier disk (e.g., one need no longer worry about the merits of such a carrier as a deposition-substrate!). Also, such a carrier may be later coupled to one or several memory structures M.

Thus, as indicated (only diagrammatically) in Figure 6B, memory structure M may be affixed to carrier means C (e.g., a metal disk, or a metal sheet from which a plurality of disks can be formed), such as via a suitable adhesive layer A-S (bonding to reflector film r). And, advantageously, optical structure O-S may be deposited (e.g., in a continuous line) on a web w of "cap material" which is relatively inexpensive, thin, flexible, and kept flat during deposition cycles (biased vs. a flat rigid pick-up plate at deposition coating stations) without regard to its "carrier-qualities". That is, since the so-formed structure(s) M may later be mounted on a separate carrier C, the carrier's surface flatness, smoothness, deposition-substrate-qualities, etc., can be ignored. In effect, and unlike prior fabrication techniques, such an approach "de-couples" the carrier from the ("optical") "load" and so "frees" the design considerably. For instance, workers are well aware of the savings involved in replacing a mirror-surface Winchester disk with a thin plastic film (substrate web) which can easily be made flatter, smoother and more receptive to the precision coatings comprising optical structure O-S.

Figure 5 depicts the kind of ODD disk typically resulting from the foregoing—where the optical structure O-S is formed (in "inverted" form) on a thin web w (as in Figure 4), then the result is affixed on a metal carrier or "backing" (Figure 6B—assume Winchester disk as carrier C).

In Figure 5, the result will be understood as an ODD disk record after the manner of Figures 1, 2 with translation indicated by the arrow. This example of operation assumes that an exemplary "agglomeration-bit" has already been written (see "void" at b) by a prescribed WRITE-beam, then translated to register with an associated READ-beam as indicated (for a "READ-AFTER-WRITE" mode of recording).

### Mechanical backing consideration

One can use aluminum blanks ("Winchester disks") as the mechanical backing (carrier). With such an aluminum blank, it will be more appropriate to stamp-out the memory structure M before laminating it to the aluminum blank C.

One may also use a rigid, stable (thermally- and mechanically-) polymer, such as polyetherimide as a less expensive backing. In such a case, it is easier to laminate the structure M to a sheet of backing before stamping-out the composite disk. This will make the procedures of lamination and registration less problematical.

Workers will recognize that such a substitute web w offers the possibility of a "continuous" fabrication sequence, especially for "memory structures" (e.g., to be individually bonded to a carrier disk)—or for the complete disk in appropriate instances. This is indicated in the idealized web-stamping sequence indicated in Figure 9, where the substrate web wa (e.g., web w of EX. I, Figure 5, on which memory structure M has been fabricated) can be brought to a "stamping station" where a stamp-die S-D, or the like, is operated to cut-out (stamp) like disk shapes as known in the art.

Further, in certain cases, it will be appropriate to pre-attach a relatively rigid carrier strip (see metal carrier C in Figure 5) to this web-memory configuration and cut-out the entire, composite disk in a single operation. Figure 11 is a plan view of a relatively large disk Da to be cut-out of a web w, with the center-hole therefore used to simultaneously co-stamp a "small" disk DB, with its own center-hole (e.g., 14" disk and 6" disk as workers will understand).

Figure 6A: shows the substrate used as the carrier.

Instead of a so-coupling the structure M to a metal carrier (Figures 6B, 5), one may in some cases (e.g., as a savings in cost) use the substrate w as its own carrier (e.g., increasing thickness, rigidity, etc., of w accordingly). In such a case one will likely wish to seal the "back side" of the reflector r (e.g., vs. intrusion of moisture, etc.; mechanical abrasion, etc.). Such is indicated (only diagrammatically) in Figure 6A.

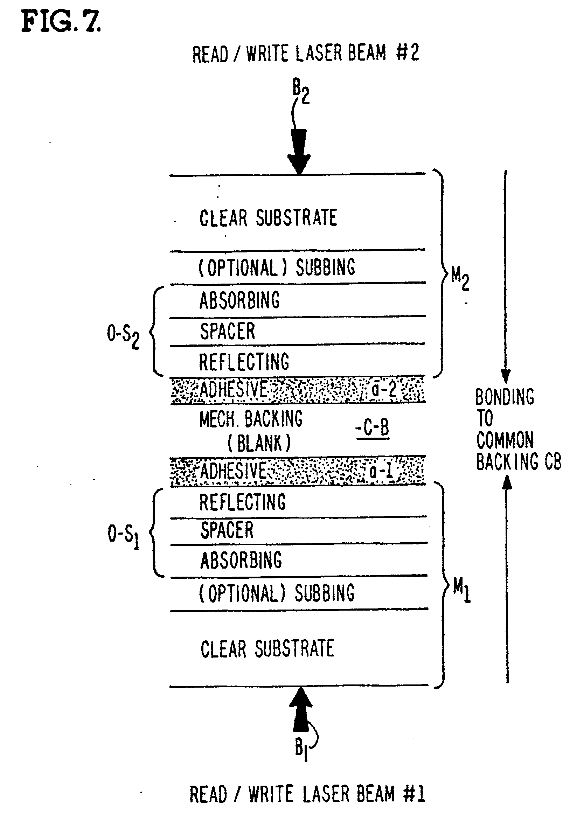

Figure 7 shows (only very schematically) an example wherein the "backing" (see C in Figure 6B) is adapted to carry not one, but two memory structures (being otherwise understood as similarly fabricated and used—e.g., each side having its respective read/write means, etc.). More particularly, where one memory structure $M_1$, including optical unit O-S, is bonded to a carrier means C-B (via adhesive a-1) and understood as operated upon by R/W beam #$B_1$—in like manner a second memory structure $M_2$ (including optical unit O-$S_2$) is similarly bonded to the opposite side of C-B (via associated adhesive means a-2), and operated upon by respective read/write beam #$B_2$. Cost-effectiveness can thus be enhanced, of course, where such a "two-sided" disk is practical.

Figure 8 illustrates an embodiment of the present invention wherein only one common reflector RF is provided—to be used (e.g., via beams $B_1$, $B_2$ as before) in common by a pair of opposed "spacer-absorber" units S-$A_1$, S-$A_2$—all layers being deposited on common substrate SB, with a clear protective overcoat ("cap") OC being added opposite SB.

—Molded substrate:

As a (less-preferred) variation to the above described web-substrate, workers will appreciate that other techniques are, in many instances, feasible. For instance, one may mold a discrete substrate; e.g., using well-known "injection molding" techniques (and depositing on this). Good, optically-compatible, injection-molded substrates have been used for optical disks with air-sandwich structure, or with other media (e.g., with a single layer of absorber material).

One can use a similar approach for this "reverse tri-layer". In this approach, one can continue the vacuum coating process by depositing a spacer layer on the other side of the common reflecting layer RF of the existing tri-layer, and then an absorbing layer as shown in Figure 8. Then a spin-coated overcoat OC (or laminated overcoat) can be applied, to thus produce a "double-sided disk". The advantage of this approach is that only one "pump down" is needed for all "vacuum processes' for a two-sided disk. Also, a common reflecting layer is used, which eliminates one layer of material and a coating step. The savings can be appreciable.

One of the important advantages of an injection molded substrate is that the servotracking and formatting information can be replicated by various molding processes. In this way, servowriting (on each disk) can be eliminated, with additional cost-savings resulting (e.g., as in Figure 11 or Figure 3).

Figure 11 functionally suggests a related embossing, or like pattern-impressing operation for record disks, wherein a continuous-web ww (e.g., analogous to Wa in Figure 9), will be understood as super-coated (or softened) at a coating station TC to present a relatively "malleable" surface to an embossing station where a die ED impresses a pattern thereon (and may also thermally-cut the disk dd from web ww) according to known techniques. Figure 3 depicts essentially the same operation, except that (one or a plurality of) die impressions are rendered by a die roll ED in a known fashion.

Further modifications of the invention are also possible. For example, the means and methods disclosed herein are also applicable to other disk systems and the like. Also, the present invention is applicable for providing other like media for other forms of recording and/or reproducing systems, such as those in which data is recorded and reproduced thermally.

**Claims**

1. A method of fabricating a double sided optical recording disk responsive on each side to a write-radiation beam (B1, B2) of prescribed energy and wavelength, the method being characterised by comprising the steps of: selecting a clear polymer substrate (SB) transparent to said radiation beam (B1), having a defocusing thickness, and having a surface adapted to enhance island deposition; depositing a first non-ablative island absorber film (A2) onto said surface of said substrate; depositing a first polymeric spacer layer (SPACER in S-A1) onto said first island film (A2); depositing a reflective film (RF), reflective on both sides, onto said first polymeric spacer layer (SPACER in S-A2); depositing a second polymeric spacer layer (SPACER in S-A2) onto said reflective layer (RF); depositing a second non-ablative island absorber film (A1) onto said second polymeric spacer layer (SPACER in S-A2); and depositing a clear polymer overcoat layer (OC), transparent to said radiation beam (B2) and having a defocusing thickness, onto said second island film (A1); both said first and second spacer layers (SPACER) having anti-reflective properties in combination with the reflector film (RF).

2. A method according to Claim 1 wherein said surface of said substrate (SB) includes a subbing layer (Sm) transparent to said radiation beam (B1).

3. A method according to Claim 1 or Claim 2 wherein said polymer overcoat layer (OC) is a spin-coated layer.

4. A method according to Claim 1 or Claim 2 wherein said polymer overcoat layer (OC) is a laminated layer.

5. A method according to any of the preceding Claims including forming said substrate from thermo-plastic material and embossing or moulding servo track and formatting information onto said substrate.

6. A double-sided optical recording disk responsive on each side to a write-radiation beam fabricated according to the method claimed in any of the preceding Claims, characterised by said disk comprising a clear substrate (SB), a first absorber layer (A2) on said substrate (SB); a first spacer layer (SPACER in S-A1) on said first absorber layer (A2); a reflector layer (RF) on said first spacer layer (SPACER in S-A1), said reflector layer being reflective on both sides; a second spacer layer (SPACER in S-A2) on said reflector layer (RF); a second absorber layer on said second spacer layer (SPACER in S-A2); and a clear overcoat layer (OC) on said second absorber layer (A1), both said first and second spacer layers (SPACER) having anti-reflective properties in combination with the reflector layer (RF).

## Patentansprüche

1. Verfahren zur Herstellung einer doppelseitigen, optischen Aufzeichnungsplatte, die auf jeder Seite für einen Schreibstrahl (B1, B2) bestimmter Energie und Wellenlänge empfindlich ist, gekennzeichnet durch folgende Schritte:

Auswahl eines klaren Polymersubstrats (SB), das für den Strahl (B1) transparent ist, eine eine Streuung verursachende Stärke hat und eine Oberfläche aufweist, die eine Inseldeposition verstärkt;

Aufbringen eines ersten nicht-wärmeabsorbierenden Insel-Absorberfilms (A2) auf die Oberfläche des Substrats;

Aufbringen einer ersten polymeren Abstandsschicht (SPACER in S-A1) auf den erste Inselfilm (A2);

Aufbringen eines auf beiden Seiten reflektierenden Films (RF) auf die erste polymere Abstandsschicht (SPACER in S-A1);

Aufbringen einer zweiten polymeren Abstandsschicht (SPACER in S-A2) auf die reflektierende Schicht (RF);

Aufbringen eines zweiten nicht-wärmeabsorbierenden Insel-Absorberfilms (A1) auf die zweite polymere Abstandsschicht (SPACER in S-A2); und

Aufbringen einer klaren, polymeren Überzugsschicht (OC), die für den Strahl (B2) transparent ist und eine eine Streuung verursachende Stärke hat, auf den zweiten Inselfilm (A1);

wobei sowohl die erste als auch die zweite Abstandsschicht (SPACER) nicht-reflektierende Eigenschaften in Kombination mit dem Reflektorfilm (RF) aufweisen.

2. Verfahren nach Anspruch 1, dadurch gekennzeichnet, daß die Oberfläche auf dem Substrat (SB) eine Unterschicht (Sm) hat, die für den Strahl (B1) transparent ist.

3. Verfahren nach Anspruch 1 oder 2, dadurch gekennzeichnet, daß die polymere Überzugsschicht (OC) eine im Schleuderverfahren aufgebrachte Schicht ist.

4. Verfahren nach Anspruch 1 oder 2, dadurch gekennzeichnet, daß die polymere Überzugsschicht (OC) eine laminierte Schicht ist.

5. Verfahren nach einem oder mehreren der vorstehenden Ansprüche, dadurch gekennzeichnet, daß das Substrat aus thermoplastischem Material geformt ist, Servospuren eingeprägt oder eingeformt sind und formatierende Informationen auf das Substrat aufgebracht sind.

6. Doppelseitige, optische Aufzeichnungsplatte, die auf jeder Seite für einen Schreibstrahl empfindlich ist, und die nach einem Verfahren nach einem oder mehreren der vorstehenden Ansprüche hergestellt ist, dadurch gekennzeichnet, daß die Platte ein klares Substrat (SB) und eine erste Absorberschicht (A2) auf dem Substrat (SB) aufweist;

daß eine erste Abstandsschicht (SPACER in S-A1) auf der ersten Absorberschicht (A2) vorgesehen ist;

daß eine Reflektorschicht (RF) auf der ersten Abstandsschicht (SPACER in S-A1) angeordnet ist, wobei die Reflektorschicht auf beiden Seiten reflektierend ist;

daß eine zweite Abstandsschicht (SPACER in S-A2) auf der Reflektorschicht (RF) vorgesehen ist;

daß eine zweite Absorberschicht auf der zweiten Abstandsschicht (SPACER in S-A2) vorgesehen ist;

daß eine klare Überzugsschicht (OC) auf der zweiten Absorberschicht (A1) vorgesehen ist; und

daß sowohl die erste als auch die zweite Abstandsschicht (SPACER) nicht-reflektierende Eigenschaften in Kombination mit der Reflektorschicht (RF) aufweisen.

## Revendications

1. Procédé de fabrication d'un disque d'enregistrement optique à double face coopérant sur chaque face avec un faisceau de radiation (B1, B2) d'énergie et de longueur d'onde prédéterminées, procédé caractérisé en ce qu'il comprend les phases suivantes:
—on choisit un support de polymère clair (SB), transparent à ce faisceau de radiation (B1), ayant une épaisseur de défocalisation et une surface susceptible d'améliorer le dépôt d'îlots,
—on dépose un premier film absorbant d'îlots, non amovible (A2) sur cette face du support,
—on dépose une première couche d'espacement en polymère (espacement dans S-A1) sur le premier film d'îlots A2,
—on dépose un film (RF) réfléchissant sur ses deux faces sur la première couche d'espacement en polymère (espacement dans S-A2),
—on dépose une seconde couche d'espacement en polymère (espacement dans S-A2) sur cette couche réfléchissante (RF);
—on dépose un second film absorbantnon amovible pour former des îlots A1 sur cette seconde couche d'espacement en polymère (espacement dans S-A2) et on dépose une couche de revêtement de polymère claire (OC) transparent à ce faisceau de rayonnement (B2) et ayant une épaisseur de défocalisation, sur le second film (A1) d'îlots la première et la seconde couches d'espacement (espacement) ayant des caractéristiques antiréfléchissantes en combinaison avec le film non réfléchissant (RF).

2. Procédé selon la revendication 1, caractérisé en ce que la surface du support (SB) comporte une sous-couche (Sm) transparente à ce faisceau de rayonnement (B1).

3. Procédé selon la revendication 1 ou la revendication 2, caractérisé en ce que la couche de revêtement de polymère (OC) est appliquée par rotation.

4. Procédé selon la revendication 1 ou la revendication 2, caractérisé en ce que la couche de revêtement de polymère est une couche de revêtement laminée (OC).

5. Procédé selon l'une quelconque des revendications précédentes caractérisé en ce qu'on réalise le support en une matière thermoplastique et on estampe ou un moule la piste d'asservissement et de formatage dans le support.

6. Disque optique à double face dont chaque face est sensible à un faisceau d'écriture, disque fabriqué selon le procédé de l'une quelconque des revendications précédentes, caractérisé en ce qu'il se compose d'un support clair (SB), d'une première couche absorbante (A2) réalisée sur le support ((SB) espacement (espacement dans S-A1) sur la première couche absorbante (A2), une couche réfléchissante (RF) sur la première couche d'espacement (espacement dans S-A1) cette couche étant réfléchissante sur ces deux faces, une seconde couche d'espacement (espacement dans S-A2) sur la couche réfléchissante (RF), une seconde couche absorbante sur la première couche d'espacement (espacement dans S-A2) et une couche de revêtement clair (OC) sur la seconde couche absorbante (A1), la première et la seconde couches d'espacement (espacement) ayant des caractéristiques anti-réfléchissantes en combinaison avec la couche réfléchissante (RF).

# FIG.1.

# FIG.2.

TEFLON DIELECTRIC 114
REFLECTOR 113
GOLD ABSORBER 115
(CP)

POLYMER OVERCOAT
180μm THICK  100-0C

14" ALUMINUM DISK 112

POLYMER SUBBING LAYER 112-3

# FIG.3.

OPTIONAL
THERMAL
PLASTIC
COATER TC

EMBOSSING
ROLL ER

ww

dd

# FIG.4.

M

r
sp } O-S
a
sm(Optional)

w

# FIG.5.

WRITE BEAM     READ BEAM        WRITE    READ

DUST

CLEAR WEB w

READ
AFTER
WRITE

SUBBING LAYER sm
ABSORBER a
(b.)
TRILAYER
O-S
DIELECTRIC sp
REFLECTOR r
ADHESIVE a-s

M

CARRIER C

# FIG. 6.

## ONE-SIDED DISK CONSTRUCTION.

# FIG. 6A.

```
                ┌─────────────────────────┐
                │   PROTECTION BACKING     │
                ├─────────────────────────┤
                │   REFLECTING            │
                ├─────────────────────────┤  ⎫
                │   SPACER                │  ⎬ O-S
                ├─────────────────────────┤  ⎭
                │   ABSORBER              │
     M ⎰        ├─────────────────────────┤
                │   (OPT.) SUBBING        │
                │                         │
                │   CLEAR SUBSTRATE    ω  │
                └─────────────────────────┘
```

# FIG. 6B.

```
                ┌─────────────────────────┐
                │   BACKING            C   │
                ├─────────────────────────┤  } A-S
                │   ADHESIVE              │
                ├─────────────────────────┤
                │   REFLECTING      r     │  ⎫
                ├─────────────────────────┤  │
                │   SPACER          sp    │  ⎬ O-S
                ├─────────────────────────┤  │
                │   ABSORBER        a     │  ⎭
     M ⎰        ├─────────────────────────┤
                │   (OPT.) SUBBING     sm │
                │                         │
                │   CLEAR SUBSTRATE    ω  │
                └─────────────────────────┘
```

# FIG. 8.

$\Downarrow B_2$

```
      ┌─────────────────────────────────────────────────────┐
  OC  │      OVERCOAT                              CLEAR     │
      │   (SPIN COATED OR LAMINATED)                         │
      ├─────────────────────────────────────────────────────┤  ⎫
S-A₂ ⎰│         ABSORBING                   A₁              │  ⎬ T₁
      ├─────────────────────────────────────────────────────┤  ⎭
      │         SPACER                                       │
  RF  ├─── REFLECTOR ───────────────────────────────────────┤
      │         SPACER                                       │  ⎫
S-A₁ ⎰│                                                      │  ⎬ T₂
      │         ABSORBING                   A₂              │  ⎭
  Sm  ├─── SUBBING (OPTIONAL) ───────────────────────────────┤
      │                                                      │
  SB  │   CLEAR SUBSTRATE                                    │
      └─────────────────────────────────────────────────────┘
```

$\Uparrow B_1$

# FIG. 7.

READ / WRITE LASER BEAM #2

$B_2$

CLEAR SUBSTRATE

(OPTIONAL) SUBBING

$M_2$

$0-S_2$ {
ABSORBING

SPACER

REFLECTING
}

ADHESIVE                    a-2

MECH. BACKING        -C-B
(BLANK)

ADHESIVE                    a-1

$0-S_1$ {
REFLECTING

SPACER

ABSORBING
}

(OPTIONAL) SUBBING

$M_1$

CLEAR SUBSTRATE

$B_1$

BONDING
TO
COMMON
BACKING CB

READ / WRITE LASER BEAM #1

4

# FIG.9.

WEB MOTION

STAMP

DIE S-D

WEB Wa

# FIG.10.

14" DISK Da

6" DISK Db

w'

# FIG.11

OPTIONAL THERMAL PLASTIC COATER TC

EMBOSSING die ED

WW

dd